# EUROPEAN PATENT APPLICATION

(11) **EP 1 605 464 A2**
(43) Date of publication of application: **14.12.2005**
(21) Application number: 05103540.0
(22) Date of filing: 28.04.2005
(51) Int. Cl.: G11B 20/10

(54) **Optical disc apparatus and information playback method**

(30) Priority: 31.05.2004 JP 2004162115
(71) Applicant: KABUSHIKI KAISHA TOSHIBA, Tokyo (JP)
(72) Inventor: Kashihara, Yutaka, c/o Toshiba Corporation, Minato-ku Tokyo 105-8001 (JP); Ogawa, Akihito, c/o Toshiba Corporation, Minato-ku Tokyo 105-8001 (JP); Yamakawa, Hideyuki, c/o Toshiba Corporation, Minato-ku Tokyo 105-8001 (JP); Umezawa, Kazuyo, c/o Toshiba Corporation, Minato-ku Tokyo 105-8001 (JP); Yoshida, Nobuhisa, c/o Toshiba Corporation, Minato-ku Tokyo 105-8001 (JP); Oomachi, Noritake, c/o Toshiba Corporation, Minato-ku Tokyo 105-8001 (JP); Nakai, Tsukasa, c/o Toshiba Corporation, Minato-ku Tokyo 105-8001 (JP); Tsukamoto, Takayuki, c/o Toshiba Corporation, Minato-ku Tokyo 105-8001 (JP)
(74) Representative: Henkel, Feiler & Hänzel

(57) **Abstract**

An optical disc apparatus includes an offset control unit (42) which selects a parameter in accordance with the type of optical disc, and executes signal processing (offset control) by using the selected parameter.

## Description

The present invention relates to an optical disc apparatus which plays back information from an optical disc on the basis of light reflected from the optical disc. The present invention also relates to an information playback method for playing back information from an optical disc on the basis of reflected light from the optical disc.

In recent years, an optical disc apparatus has been proposed, which includes various playback signal processing techniques for accurately playing back an optical disc. For example, in Jpn. Pat. Appln. KOKAI Publication No. 2001-195830 (paragraph No. 0123, FIGS. 20, 21, and 22, loop filter 49), an optical disc apparatus is proposed, which includes a technique for improving playback signal quality and playability against an abnormal signal by offset correction and a loop filter.

However, in the above reference, the contents of the loop filter (a circuit for smoothing a detected offset value) of an offset controller are not disclosed. Assuming a general loop filter, a loop filter control band is uniquely determined, and cannot be changed. Hence, once a given loop filter control band of the offset controller is determined for one type of optical disc serving as a target, a playback signal offset cannot always be sufficiently suppressed when playing back another type of optical disc as the target. As a result, sufficient performance for identifying the playback signal cannot be obtained, thus posing a problem.

It is an object of the present invention to provide an optical disc apparatus and an information playback method for performing playback with high precision in correspondence with various types of optical discs.

In an aspect of the present invention, an optical disc apparatus comprises a detection unit configured to detect reflected light from an optical disc, a signal processing unit configured to generate a binary signal from an analog playback signal based on the reflected light, and a determination unit configured to determine the type of optical disc on the basis of the information representing the type of optical disc which is reflected to the reflected light, wherein the signal processing unit selects one of a plurality of parameters for determining a signal processing bandwidth on the basis of a determination result of the type of optical disc, and generates the binary signal from the analog playback signal on the basis of the selected parameter.

In another aspect of the present invention, an information playback method comprises detecting reflected light from an optical disc, determining the type of optical disc on the basis of the information representing the type of optical disc which is reflected to the reflected light, selecting one of a plurality of parameters for determining a signal processing bandwidth on the basis of a determination result of the type of optical disc, and generating a binary signal from an analog playback signal based on the reflected light, on the basis of the selected parameter.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing an example of a schematic arrangement of a signal processing circuit according to a first embodiment;
FIG. 2 is a block diagram showing an example of a schematic arrangement of an offset controller;
FIG. 3 is a graph showing an example of a playback signal obtained from a single-layered optical disc in a case wherein offset control is not applied;
FIG. 4 is a graph showing an example of the playback signal obtained from the single-layered optical disc in a case wherein the offset control is applied;
FIG. 5 is a graph showing an example of a playback signal obtained from a two-layered optical disc in a case wherein the offset control is not applied;
FIG. 6 is a graph showing an example of the playback signal obtained from the two-layered optical disc in a case wherein the offset control is applied;
FIG. 7 is a block diagram showing an example of a schematic arrangement of a signal processing circuit according to a second embodiment;
FIG. 8 is a graph showing an example of the relationship between an offset control band and an SbER value on a single-layered optical disc;
FIG. 9 is a graph showing an example of the relationship between an offset control band and an SbER value on a two-layered optical disc;
FIG. 10 is a block diagram showing an example of a schematic arrangement of a signal processing circuit according to a third embodiment;
FIG. 11 is a block diagram showing an example of a schematic arrangement of a signal processing circuit according to the fourth embodiment;
FIG. 12 is a block diagram showing a schematic arrangement of the example of an optical disc apparatus in the present invention;
FIG. 13 is a block diagram showing a schematic arrangement of another example of an optical disc apparatus in the present invention;
FIG. 14 is a flowchart for explaining signal processing according to the first embodiment; and
FIG. 15 is a flowchart for explaining signal processing according to the second embodiment.

A schematic arrangement of the example of an optical disc apparatus in the present invention will be described below with reference to the accompanying drawing.

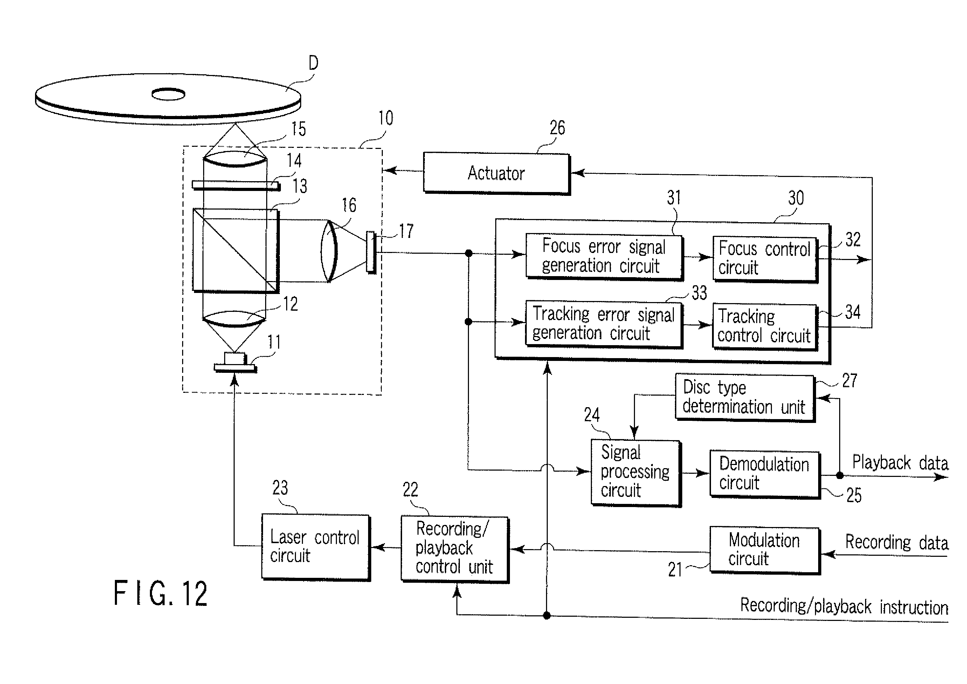

FIG. 12 is a block diagram showing a schematic arrangement of the example of the optical disc apparatus in the present invention. This optical disc apparatus records information on an optical disc D, and plays back data recorded on the optical disc D.

The optical disc D records the information in the form of a mark and space in advance. Also, on the optical disc D, a modulation code for setting the shortest mark or shortest space to 2T is employed. The optical disc apparatus plays back the information recorded on the optical disc D, at the channel bit rate of 64.8 Mbps. The optical disc D serving as the playback target includes two types of optical discs. One is a so-called single-layered optical disc having one recording/playback layer on each side, and the other is a so-called two-layered optical disc having two recording/playback layers on each side. On the single-layered and two-layered optical discs, pieces of information representing the types of optical discs are recorded at predetermined positions.

As shown in FIG. 12, the optical disc apparatus includes an optical pickup 10, modulation circuit 21, recording/playback control unit 22, laser control circuit 23, signal processing circuit 24, demodulation circuit 25, actuator 26, disc type determination unit 27, and focus tracking control unit 30.

The optical pickup 10 also includes a laser 11, collimator lens 12, polarization beam splitter (to be referred to as a PBS hereinafter) 13, quarter-wavelength plate 14, objective lens 15, focus lens 16, and photodetector 17.

The focus tracking control unit 30 also includes a focus error signal generation circuit 31, a focus control circuit 32, tracking error signal generation circuit 33, and tracking control circuit 34.

The operation of recording the information on an optical disc D in this optical disc apparatus will be described below. The modulation circuit 21 modulates recorded information (data symbol) from a host in accordance with a predetermined modulation method into a channel bit sequence. The channel bit sequence corresponding to the recorded information is input to the recording/playback control unit 22. Also, a recording/playback instruction (in this case, recording instruction) is output from the host to this recording/playback control unit 22. The recording/playback control unit 22 outputs a control signal to the actuator 26, and drives an optical pickup such that the light beam is appropriately focused on a target recording position. The recording/playback control unit 22 also supplies the channel bit sequence to the laser control circuit 23. The laser control circuit 23 converts the channel bit sequence into a laser driving waveform, and drives the laser 11. That is, the laser control circuit 23 pulse-drives the laser 11. In accordance with this operation, the laser 11 emits the recording light beam corresponding to the desired bit sequence. The recording light beam emitted from the laser 11 becomes parallel light by the collimator lens 12, and enters and passes through the PBS 13. The beam passing through the PBS 13 then passes through the quarter wavelength plate 14, and focused on the information recording surface of the optical disc D by the objective lens 15. The focused recording light beam is maintained in a state capable of obtaining the best microspot on the recording surface by focus control performed by the focus control circuit 32 and actuator 26, and the tracking control performed by the tracking control circuit 34 and actuator 26.

The operation of playing back the data from the optical disc D in this optical disc apparatus will be described below. A recording/playback instruction (in this case, playback instruction) is output from the host to the recording/playback control unit 22. The recording/playback control unit 22 outputs a playback control signal to the laser control circuit 23 in accordance with the playback instruction from the host. The laser control circuit 23 drives the laser 11 based on the playback control signal. In accordance with this operation, the laser 11 emits the playback light beam. The playback light beam emitted from the laser 11 becomes parallel light by the collimator lens 12, and enters and passes through the PBS 13. The light beam passing through the PBS 13 then passes through the quarter-wavelength plate 14, and focused on the information recording surface of the optical disc D by the objective lens 15. The focused playback light beam is maintained in an optimal beam spot on the recording surface by focus control performed by the focus control circuit 32 and actuator 26, and the tracking control performed by the tracking control circuit 34 and actuator 26. Note that the tracking control will be described in detail below. In this case, the playback light beam emitted on the optical disc D is reflected by a reflecting film or a reflective recording film in the information recording surface. Reflected light passes through the objective lens 15 in the opposite direction, and becomes the parallel light again. The reflected light then passes through the quarter-wavelength plate 14, has vertical polarization with respect to incident light, and is reflected by the PBS 13. The beam reflected by the PBS 13 becomes convergent light by the focus lens 16, and enters the photodetector 17. The photodetector 17 has, e.g., four photodetectors. The light beam which becomes incident on the photodetector 17 is photo-electrically converted into an electrical signal and amplified. The amplified signal is equalized and binarized by the signal processing circuit 24 and sent to the demodulation circuit 25. The demodulation circuit 25 executes a demodulation operation corresponding to a predetermined modulation method and outputs playback data.

On the basis of part of the electrical signal output from the photodetector 17, the focus error signal generation circuit 31 generates a focus error signal. Similarly, on the basis of part of the electrical signal output from the photodetector 17, the tracking error signal generation circuit 33 generates a tracking error signal. The focus control circuit 32 controls the actuator 26 and the focus of the beam spot, on the basis of the focus error signal. The tracking control circuit 34 controls the actuator 26 and the tracking of the beam spot, on the basis of the tracking error signal.

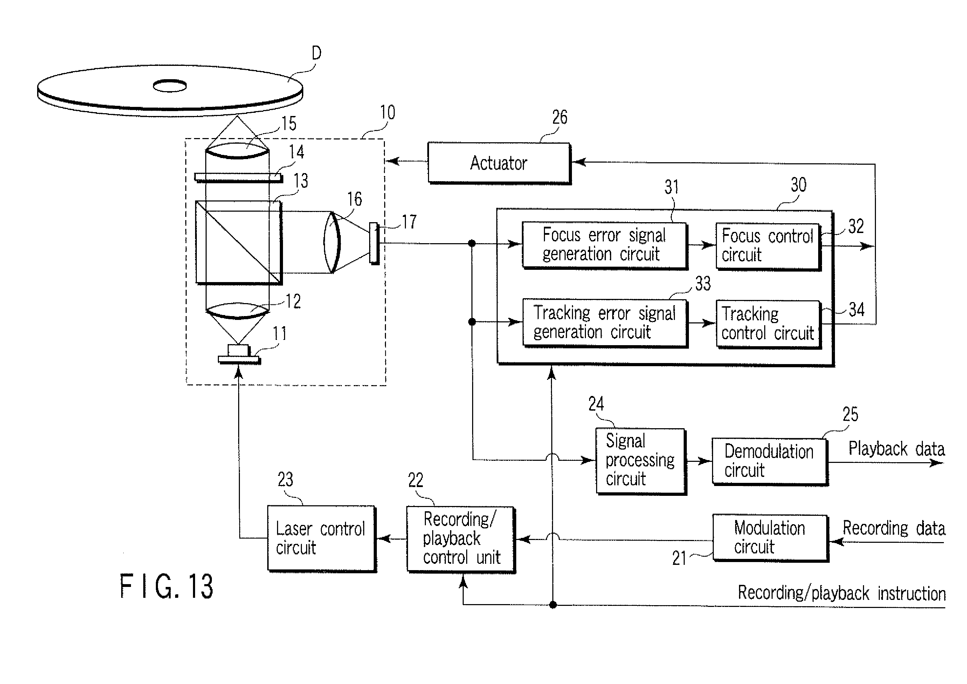

The disc type determination unit 27 determines the type of optical disc D on the basis of the information which is contained in the playback data and represents the type of optical disc. That is, the disc type determination unit 27 determines, e.g., whether the optical disc D is a single-layered or two-layered optical disc. FIG. 13 is a block diagram showing a schematic arrangement of an optical disc apparatus according to another example of the present invention. The optical disc apparatus in FIG. 13 is different from that in FIG. 12 in that the optical disc in FIG. 13 does not include the disc type determination unit 27, while the optical disc apparatus in FIG. 12 includes this disc type determination unit 27. The remaining basic arrangement of the optical disc apparatus in FIG. 13 is the same as that in FIG. 12.

The signal processing circuit 24 will be described in detail below. This signal processing circuit 24 executes the following operations.

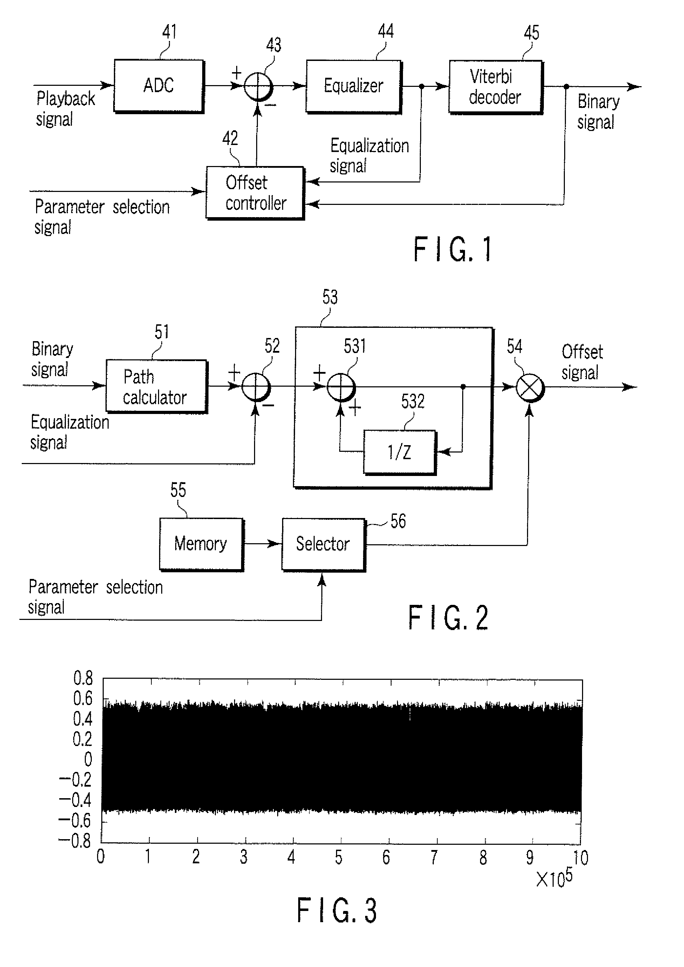

FIG. 1 is a block diagrams showing a schematic arrangement of the signal processing circuit 24 according to a first embodiment. The signal processing circuit 24 in the first embodiment corresponds to the signal processing circuit 24 of the optical disc apparatus shown in FIG. 12. This signal processing circuit 24 in the first embodiment includes an analog-to-digital converter (ADC) 41, offset controller 42, subtractor 43, equalizer 44, and Viterbi decoder 45.

An analog playback signal output from the optical detector 17 is amplified by a preamplifier (not shown), and then converted into a digital playback signal by the ADC 41. The offset controller 42 outputs an offset signal representing an offset amount. The subtractor 43 subtracts the offset signal (offset amount) from the digital playback signal. This subtraction result is input to the equalizer 44. The equalizer 44 adjusts the frequency characteristics and phase characteristics of the playback signal. As a result, the output signal (to be referred to as an equalization signal hereinafter) obtains partial response characteristics (to be referred to as PR characteristics hereinafter). The Viterbi decoder 45 identifies the signal from the equalization signal in accordance with a Viterbi algorithm, and outputs a binary signal.

The equalization and binary signals are input to the offset controller 42, and the offset controller 42 calculates the offset amount. The offset controller 42 also receives a parameter selection signal. The data representing the type of optical disc is recorded at the predetermined position of the optical disc D in advance. The disc type determination unit 27 of the optical disc apparatus specifies the type of optical disc on the basis of the information which is contained in the playback data, and represents the type of optical disc. The parameter selection signal according to the type of optical disc is transmitted to the offset controller 42.

FIG. 2 is a block diagram showing a schematic arrangement of the offset controller 42. The offset controller 42 includes a path calculator 51, subtractor 52, integrator 53, multiplier 54, memory 55, and selector 56.

The path calculator 51 calculates, from the binary signal, a path corresponding to PR characteristics to be used. The subtractor 52 subtracts the equalization signal from this path. This subtraction result is an error signal. The error signal is input to the integrator 53. The integrator 53 includes an adder 531 and unit delay element 532. The multiplier 54 multiplies the output signal from the integrator 53 by a gain. This multiplication result is the offset signal. The memory 55 stores the gain (parameter) corresponding to the type of optical disc in advance. For example, the gain for the single-layered optical disc is 1/2048, and that for the two-layered optical disc is 1/512. These gains respectively correspond to the control bands of 5 and 20 kHz in the offset controller 42. The selector 56 selects the gain for the single-layered or two-layered optical disc in accordance with the parameter selection signal.

FIGS. 3 to 6 are graphs for explaining an effect obtained by the signal processing circuit 24 according to the first embodiment.

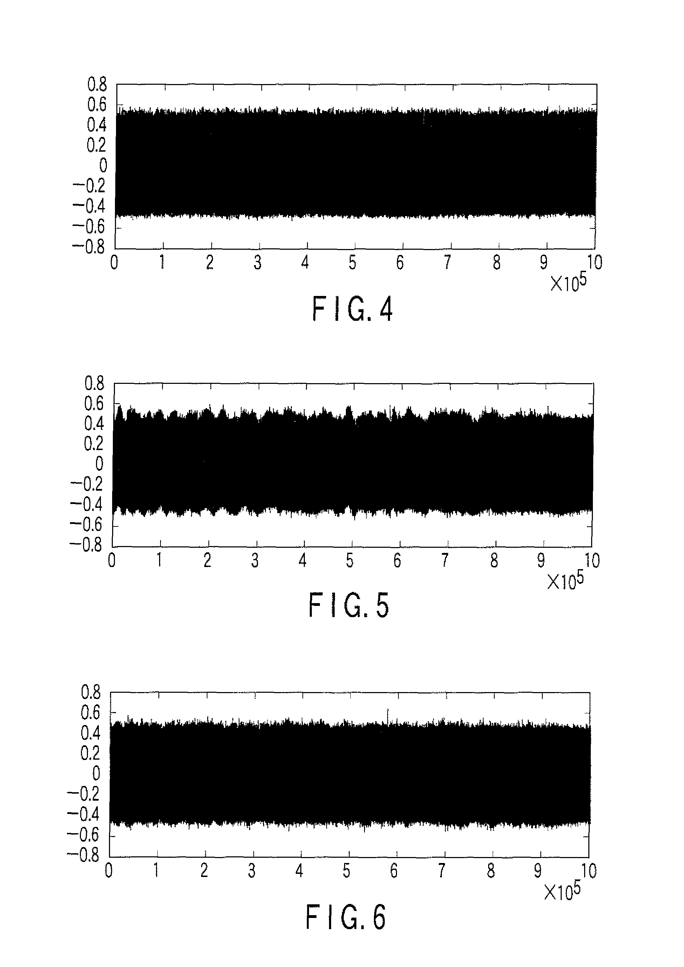

FIG. 3 is a graph showing the playback signal obtained from the single-layered optical disc in the case wherein the above-described offset control is not applied. FIG. 4 is a graph showing the playback signal obtained from the single-layered optical disc in the case wherein the above-described offset control is applied. As can be apparent from FIGS. 3 and 4, the offset fluctuation of the playback signal obtained from the single-layered optical disc is small. That is, the offset fluctuation can be sufficiently suppressed even when the control band (signal processing bandwidth) of the offset controller 42 is 5 kHz.

FIG. 5 is a graph showing the playback signal obtained from the two-layered optical disc in the case wherein the above-described offset control is not applied. FIG. 6 is a graph showing the playback signal obtained from the two-layered optical disc in the case wherein the above-described offset control is applied. The offset fluctuation of the playback signal obtained from the two-layered optical disc is larger than that of the playback signal obtained from the single-layered optical disc. Also, the fluctuation frequency of the playback signal from the two-layered optical disc is higher than that of the playback signal from the single-layered optical disc. As shown in FIG. 6, when the control band (signal processing bandwidth) of the offset controller 42 is set to 20 kHz, the offset fluctuation can be suppressed.

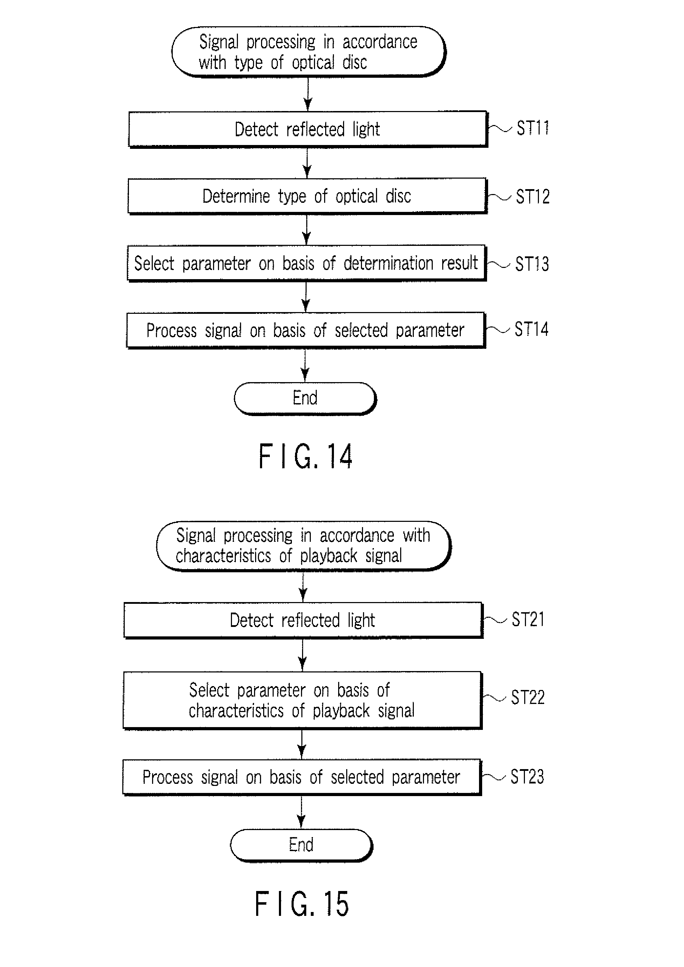

FIG. 14 is a flowchart briefly showing signal processing of the first embodiment. As shown in FIG. 14, the optical detector 17 of the optical disc apparatus in FIG. 12 detects the reflected light from the optical disc (ST11). The disc type determination unit 27 of the optical disc apparatus shown in FIG. 12 also determines the type of optical disc on the basis of the information representing the type of optical disc which is reflected to the reflected light (ST12). Similarly, the offset controller 42 of the signal processing circuit 24 in the optical disc apparatus shown in FIG. 12 selects one of a plurality of parameters (gains) stored in the memory 55, on the basis of the determination result (parameter selection signal) of the type of optical disc (ST13). Furthermore, this signal processing circuit 24 executes subtraction and the like on the basis of the selected parameter, and finally generates the binary signal (ST14).

As described above, the optical disc apparatus of the present invention can change the control band (signal processing bandwidth) of the offset controller according to the type of optical disc. Therefore, the data can be played back from the plurality of types of optical discs of the sufficient identification performance.

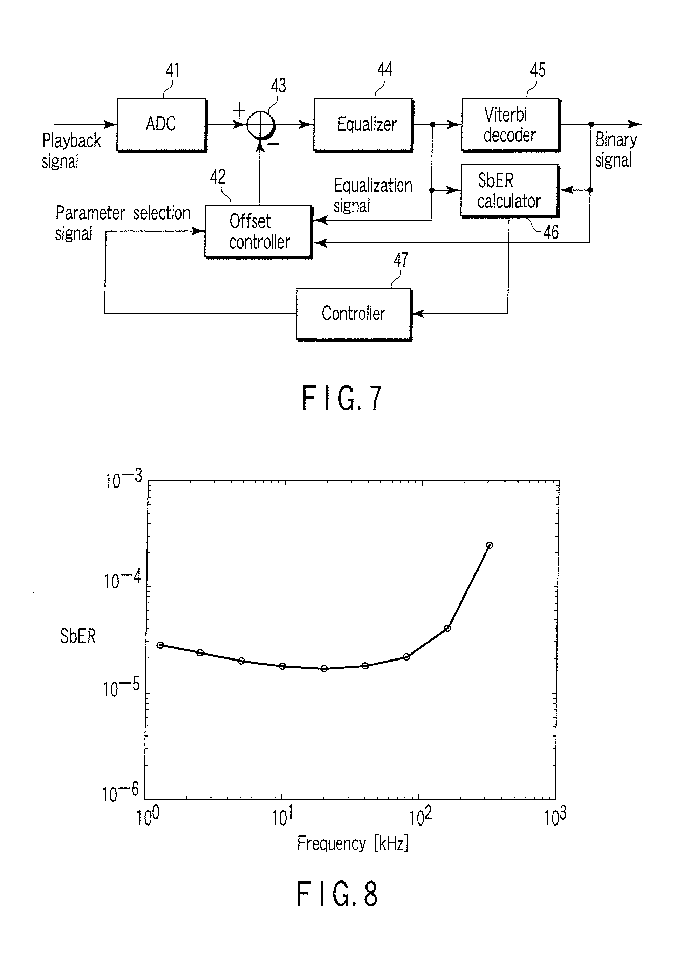

FIG. 7 is a block diagrams showing a schematic arrangement of a signal processing circuit 24 according to a second embodiment. The signal processing circuit 24 in the second embodiment corresponds to the signal processing circuit 24 of the optical disc apparatus shown in FIG. 13. This signal processing circuit 24 in the second embodiment includes an ADC 41, offset controller 42, subtractor 43, equalizer 44, Viterbi decoder 45, SbER calculator 46, and controller 47.

An analog playback signal output from the optical detector 17 is amplified by a preamplifier (not shown), and then converted into a digital playback signal by the ADC 41. The offset controller 42 outputs an offset signal representing an offset amount. The subtractor 43 subtracts the offset signal (offset amount) from the digital playback signal. This subtraction result is input to the equalizer 44. The equalizer 44 adjusts the frequency characteristics and phase characteristics of the playback signal. As a result, an equalization signal from the equalizer 44 serves as PR characteristics. The Viterbi decoder 45 identifies the signal from the equalization signal in accordance with a Viterbi algorithm, and outputs a binary signal.

The equalization and binary signals are input to the offset controller 42, and the offset controller 42 calculates the offset amount. The offset controller 42 also receives a parameter selection signal. The arrangement of the offset controller 42 is shown in FIG. 2. Note that, assume that nine gains are stored in a memory 55 in the second embodiment, while the two gains are stored in the memory 55 in the first embodiment. That is, the memory 55 stores nine types of gain, i.e., 1/32, 1/64, 1/128, 1/256, 1/512, 1/1024, 1/2048, 1/4096, and 1/8192. These gains respectively correspond to the control bands (signal processing bandwidth) of 320, 160, 80, 40, 20, 10, 5, 2.5, and 1.3 kHz in the offset controller 42.

The SbER calculator 46 calculates an SbER value representing a playback signal quality. The SbER value is the estimation value of a bit Error Rate (to be referred to as a bER hereinafter). The method of calculating this SbER value is described in Jpn. J. Appl. Phys. Vol. 42 (2003) pp. 971 - 975. The SbER value is sent to the controller 47. The controller 47 measures the relationship between the parameter selection signal from the disc type determination unit 27 and the SbER value, and then outputs the parameter selection signal such that an appropriate SbER value can be obtained at last.

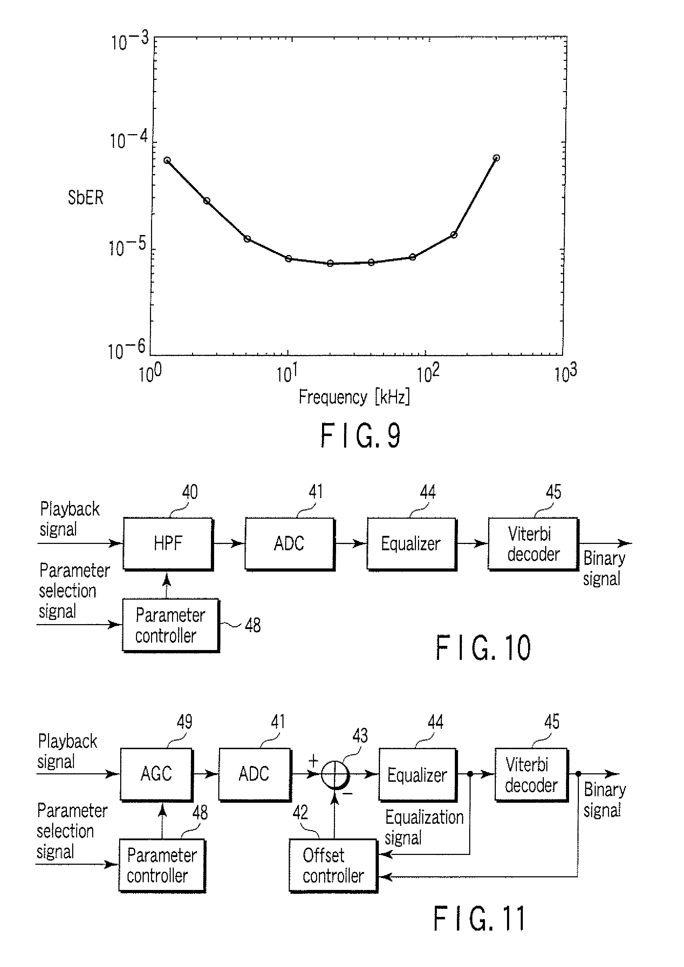

FIGS. 8 and 9 are graphs for explaining the effect of the signal processing circuit 24 according to the second embodiment.

FIG. 8 is a graph showing the relationship between the offset control band (signal processing bandwidth) and the SbER value on the single-layered optical disc. As shown in FIG. 8, on the single-layered optical disc, the SbER value does not fluctuate greatly when the offset control band is 80 kHz or less. Hence, the controller 47 finally outputs the parameter selection signal corresponding to one of the offset control bands of 80, 40, 20, 10, 5, 2.5, and 1.3 kHz.

FIG. 9 is a graph showing the relationship between the offset control band and the SbER value on the two-layered disc. As shown in FIG. 9, on the two-layered optical disc, the preferable SbER value can be obtained when the offset control band is 10 to 80 kHz. Hence, the controller 47 finally outputs the parameter selection signal corresponding to one of the offset control bands of 80, 40, 20, and 10 kHz.

FIG. 15 is a flowchart briefly showing signal processing of the second embodiment. As shown in FIG. 15, the optical detector 17 in the optical disc apparatus shown in FIG. 13 detects the reflected light from the optical disc (ST21). Similarly, the offset controller 42 of the signal processing circuit 24 in the optical disc apparatus shown in FIG. 13 selects one of a plurality of parameters on the basis of the quality level of the digital playback signal generated from the analog playback signal based on the reflected light (ST22). Also, this signal processing circuit 24 executes subtraction and the like on the basis of the selected parameter, and finally generates the binary signal (ST24).

As described above, in the present invention, the offset control band (signal processing bandwidth) can be changed such that the preferable playback signal quality is obtained. Hence, sufficient identification performance can be obtained irrespective of the type and characteristics of the optical disc.

In the above-described second embodiment, the SbER value is used for measuring the playback signal quality. However, the present invention is not limited to this. Another measuring method may be used.

As described above, the optical disc apparatus of the present invention can adjust the control band (signal processing bandwidth) of the offset controller 42 in accordance with the playback signal of the optical disc. Hence, sufficient performance can be obtained even when the offset fluctuation frequency of the playback signal of the optical disc fluctuates.

FIG. 10 is a schematic arrangement of a signal processing circuit 24 according to a third embodiment. The signal processing circuit 24 of the third embodiment can be applied as the signal processing circuit 24 of the optical disc shown in FIG. 12. In the first and second embodiments, the optical disc apparatus changes the control band of the offset controller 42 in digital signal processing. In the third embodiment, an optical disc apparatus changes an offset control band in analog signal processing.

The signal processing circuit 24 of the third embodiment includes a high-pass filter (HPF) 40, ADC 41, equalizer 44, Viterbi decoder 45, and parameter controller 48. The HPF 40 removes a low-frequency component and transmits a high-frequency component in the analog playback signal. The signal processing circuit 24 of the third embodiment uses the HPF 40 as an offset control unit. That is, the signal processing circuit 24 of the third embodiment is greatly different from that of the first embodiment in that the signal processing circuit 24 uses the HPF 40 in the third embodiment.

Note that the HPF 40 can also be applied to the signal processing circuit 24 of the second embodiment. That is, the signal processing circuit 24 of the third embodiment can serve as the signal processing circuit 24 of the optical disc apparatus shown in FIG. 13.

The parameter controller 48 controls the parameter of the HPF 40 on the basis of the parameter selection signal supplied from a disc type determination unit 27. That is, on the basis of the parameter selection signal, the parameter controller 48 sets a predetermined parameter for the HPF 40, and controls the filtering characteristics (signal processing bandwidth) of the HPF 40. Therefore, the HPF 40 executes filtering based on the filtering characteristics corresponding to the single-layered or two-layered disc.

FIG. 11 is a schematic arrangement of a signal processing circuit 24 according to the fourth embodiment. The signal processing circuit 24 of the fourth embodiment can be applied as the signal processing circuit 24 of the optical disc shown in FIG. 12. In the first to third embodiments, the optical disc apparatus changes an offset control band or an HPF parameter in accordance with the type and characteristics of the optical disc. In the fourth embodiment, the optical disc apparatus changes the gain control band (signal processing bandwidth) in accordance with the type and characteristics of the optical disc.

The signal processing circuit of the fourth embodiment includes an ADC 41, offset controller 42, subtractor 43, equalizer 44, Viterbi decoder 45, parameter controller 48, and automatic gain control (AGC) 49. The signal processing circuit 24 of the fourth embodiment uses the AGC 49 as a gain control unit. That is, the signal processing circuit 24 of the fourth embodiment is greatly different from that of the third embodiment in that the signal processing circuit 24 uses the AGC 49 in the fourth embodiment. Also, the AGC 49 may be analog AGC, or digital AGC.

Also, the AGC 49 can also be applied to the signal processing circuit 24 of the second embodiment. That is, the signal processing circuit 24 of the fourth embodiment can serve as the signal processing circuit 24 of the optical disc apparatus shown in FIG. 13.

The parameter controller 48 controls the parameter of the AGC 49 on the basis of the parameter selection signal supplied from a disc type determination unit 27. That is, the parameter controller 48 controls the gain control band (signal processing bandwidth) of the AGC 49 by switching between a parameter for the single-layered disc and that for the two-layered disc.

As described above, in the present invention, the following functional effects can be obtained.
1. Since the offset control band (signal processing bandwidth) can be adjusted in accordance with the type of optical disc, information can be preferably played back irrespective of the type of optical disc.
2. Since the offset control band (signal processing bandwidth) can be adjusted in accordance with the type of optical disc and the characteristics of the playback signal, the information can be preferably played back irrespective of the type of optical disc and the characteristic difference of the playback signal.
3. Since the gain control band (signal processing bandwidth) can be adjusted in accordance with the type of optical disc, the information can be preferably played back irrespective of the type of optical disc.
4. Since the gain control band (signal processing bandwidth) can be adjusted in accordance with the type of optical disc and the characteristics of the playback signal, the information can be preferably played back irrespective of the type of optical disc and the characteristic difference of the playback signal.

## Claims

1. An optical disc apparatus which plays back information on an optical disc on the basis of reflected light from the optical disc, **characterized by** comprising:
a detection unit (10) configured to detect the reflected light from the optical disc;
a signal processing unit (24) configured to generate a binary signal from an analog playback signal based on the reflected light; and
a determination unit (27) configured to determine a type of the optical disc on the basis of the information representing the type of the optical disc which is reflected to the reflected light,
wherein the signal processing unit selects one of a plurality of parameters for determining a signal processing bandwidth on the basis of a determination result of the type of the optical disc, and generates the binary signal from the analog playback signal on the basis of the selected parameter.

2. An apparatus according to claim 1, **characterized in that**
the determination unit determines which of a single-layered optical disc and a two-layered optical disc is the optical disc, on the basis of the information which represents the type of the optical disc, and
the signal processing unit selects the parameter corresponding to one of the single-layered optical disc and the two-layered optical disc from the plurality of parameters on the basis of the determination result of the type of the optical disc, and generates the binary signal from the analog playback signal on the basis of the selected parameter.

3. An apparatus according to claim 1, **characterized in that** the signal processing unit comprises
a conversion unit (41) configured to convert the analog playback signal into a digital playback signal,
a subtraction unit (43) configured to subtract an offset amount from the digital playback signal,
an equalization unit (44) configured to generate an equalization signal on the basis of the digital playback signal obtained by subtracting the offset amount,
a binary unit (45) configured to generate the binary signal from the equalization unit, and
an offset control unit (42) configured to select one of the plurality of parameters on the basis of the determination result of the type of the optical disc, and control the offset amount on the basis of the selected parameter, the equalization signal, and the binary signal.

4. An apparatus according to claim 1, **characterized in that** the signal processing unit comprises
a filtering unit (40) configured to remove a low-frequency component and transmit a high-frequency component in the analog playback signal,
a conversion unit (41) configured to convert the analog playback signal from which the low-frequency component is removed, into a digital playback signal,
an equalization unit (44) configured to generate an equalization signal on the basis of the digital playback signal,
a binary unit (45) configured to generate the binary signal from the equalization signal, and
a parameter selection unit (48) configured to select one of the plurality of parameters for controlling filtering characteristics by the filtering unit, on the basis of the determination result of the type of the optical disc.

5. An apparatus according to claim 1, **characterized in that** the signal processing unit comprises
a gain control unit (49) configured to control a gain of the analog playback signal,
a conversion unit (41) configured to convert the analog playback signal whose gain is controlled, into a digital playback signal,
a subtraction unit (43) configured to subtract an offset amount from the digital playback signal,
an equalization unit (44) configured to generate an equalization signal on the basis of the digital playback signal obtained by subtracting the offset amount,
a binary unit (45) configured to generate the binary signal from the equalization signal,
an offset control unit (42) configured to control the offset amount on the basis of the equalization signal and the binary signal, and
a parameter selection unit (48) configured to select one of the plurality of parameters which control a gain control band by the gain control unit, on the basis of the determination result of the type of the optical disc.

6. An optical disc apparatus which plays back information on an optical disc on the basis of reflected light from the optical disc, **characterized by** comprising:
a detection unit (10) configured to detect the reflected light from the optical disc; and
a signal processing unit (24) configured to generate a binary signal from an analog playback signal based on the reflected light,
wherein the signal processing unit selects one of a plurality of parameters for determining a signal processing bandwidth on the basis of a signal quality level of a digital playback signal generated from the analog playback signal, and generates the binary signal from the analog playback signal on the basis of the selected parameter.

7. An apparatus according to claim 6, **characterized in that** the signal processing unit comprises
a conversion unit (41) configured to convert the analog playback signal into a digital playback signal,
a subtraction unit (43) configured to subtract an offset amount from the digital playback signal,
an equalization unit (44) configured to generate an equalization signal on the basis of the digital playback signal obtained by subtracting the offset amount,
a binary unit (45) configured to generate the binary signal from the equalization unit,
a calculation unit (46) configured to calculate the signal quality level of the equalization signal, and
an offset control unit (42) configured to select one of the plurality of parameters on the basis of the signal quality level of the equalization signal, and control the offset amount on the basis of the selected parameter, the equalization signal, and the binary signal.

8. An information playback method for playing back information on an optical disc on the basis of reflected light from the optical disc, **characterized by** comprising:
detecting (ST11) the reflected light from the optical disc;
determining (ST12) a type of the optical disc on the basis of the information representing the type of the optical disc which is reflected to the reflected light,
selecting (ST13) one of a plurality of parameters for determining a signal processing bandwidth on the basis of a determination result of the type of the optical disc, and
generating (ST14) the binary signal from the analog playback signal based on the reflected light, on the basis of the selected parameter.

9. An information playback method for playing back information on an optical disc on the basis of reflected light from the optical disc, **characterized by** comprising:
detecting (ST21) the reflected light from the optical disc;
selecting (ST22) one of a plurality of parameters for determining a signal processing bandwidth on the basis of a signal quality level of a digital playback signal generated from an analog playback signal based on the reflected light; and
generating (ST23) a binary signal from the analog playback signal on the basis of the selected parameter.
